# EUROPEAN PATENT SPECIFICATION

(11) **EP 2 074 186 B1**
(45) Date of publication and mention of the grant of the patent: **21.08.2013**
(21) Application number: 07853830.3
(22) Date of filing: 08.10.2007
(51) Int. Cl.: C08J 3/205, C08J 3/22

(54) **LIQUID COLOR OR ADDITIVE CONCENTRATE USING BIO-DERIVED OILS**
FLÜSSIGFARBEN- ODER ZUSATZKONZENTRAT MIT ÖLEN AUS BIOLOGISCHER QUELLE
COULEUR LIQUIDE OU CONCENTRÉ ADDITIF UTILISANT DES HUILES D'ORIGINE BIOLOGIQUE

(30) Priority: 09.10.2006 US 828668 P
(43) Date of publication of application: 01.07.2009
(73) Proprietor: PolyOne Corporation, Avon Lake, OH 44012 (US)
(72) Inventor: MAHIAT, Bernard, B-4520 Wanze (BE); CRASSON, Benoit, B-CP 1500 Naninne (BE)
(74) Representative: Winter, Brandl, Fürniss, Hübner, Röss, Kaiser, Polte - Partnerschaft
(86) International application number: PCT/US2007/080690
(87) International publication number: WO 2008/045821

(56) References cited:
- WO-A1-03/018905
- WO-A2-2004/095319
- GB-A- 2 288 407
- US-A- 4 549 908
- US-A- 4 656 092
- US-A- 5 346 544
- US-B2- 6 596 519
- US-B2- 6 926 767

## Description

### FIELD OF THE INVENTION

This invention relates to use of oils derived from biological sources as a carrier for colorants and/or functional additives used as a concentrate for making colored or addivated plastic articles.

### BACKGROUND OF THE INVENTION

Plastic has taken the place of other materials in a variety of industries. In the packaging industry, plastic has replaced glass to minimize breakage, reduce weight, and reduce energy consumed in manufacturing and transport. In other industries, plastic has replaced metal to minimize corrosion, reduce weight, and provide color-in-bulk products.

Attracting consumers to purchase individually-sized or family-sized containers includes branding and trade dress. Among the elements of valuable trade dress is the color of the container. Moreover, such color may need to co-exist with translucency, transparency, or other special effects for the bottle.

Existing liquid color and/or additive concentrate technology uses carrier systems that are based on surfactants, oils and/or plasticizers. These products are often incompatible with many polymers resulting in loss of physical properties and processing problems such as screw slippage.

Currently, pellet-based concentrates, and pre-colored resins are used. But such uses also present problems. Pellet-based concentrates for tint applications must be used at high dilution or "letdown" ratios to achieve good color distribution. Pre-colored resins are expensive to manufacture and warehouse. Such resins also undergo two heat histories (initial compounding and subsequent molding), which can be detrimental to some polymers.

There is also considerable emphasis currently to use biologically-derived resins in plastic articles to avoid synthetic resins due to both the expense of petrochemical feedstocks and the relative inability to have such synthetic resins degrade in the environment after useful life.

### SUMMARY OF THE INVENTION

What the art needs is a biologically-derived liquid carrier for color concentrates that need consistent and precise metering of colorant into the compound, made from biologically-derived polymeric resins, to be used to make the plastic article in a single or multi-stage process.

The present invention solves the problem in the art by using a liquid of a biological origin, preferably a so-called bio-derived oil, as a carrier for concentrates to be let-down into biologically-derived polymeric resins.

One aspect of the invention is a concentrate for plastic articles, comprising: (a) a carrier comprising a bio-derived oil; (b) at least one colorant or functional additive; and (c) 0.5-1.5 weight percent of said concentrate of a defoaming oxirane surfactant; (d) silicate viscosity modifier; and optionally (e) at least other one functional additive or specialty colorant.

One feature of the present invention is that compounding the concentrate of the present invention using a bio-derived oil as the carrier permits letdown into the compounding equipment, via a fluid addition to the equipment.

Another feature of the present invention is that the colorant can include pigment(s), dye(s), or both as needed by the polymer engineer and product designer to achieve desired color effects.

Another feature of the present invention is that bio-derived oils used in the present invention are compatible with bio-derived polymeric resins now in vogue as suitable matrices for plastic articles.

Other features will become apparent from a description of the embodiments of the invention.

### EMBODIMENTS OF THE INVENTION

Bio-derived Oils

Any oil that is capable of isolation and purification from a biologically renewable source is eligible for consideration as a bio-derived oil for the present invention. Oils from animals as well as plants are candidates because such oils are already known to the environment and undergo natural biological processing such as degradation and decay in natural recycling.

Any of the common edible oils can be utilized in the present invention as carriers for colorants and/or additives to make concentrates or masterbatches for dilution into other polymeric resins, either synthetic or naturally occurring, to make extruded or molded colored plastic articles.

Useful oils include, but are not limited to, almond oil, apricot kernel oil, castor oil, coconut oil, palm oil, corn oil, cotton seed oil, olive oil, palm kernel oil, peanut oil, grape seed oil, canola oil, rice bran oil, safflower oil, sesame oil, soybean oil, sunflower seed oil, wheat germ oil, sorghum, coco butter, and combinations thereof. Presently grape seed oil is preferred.

Significant to the use of bio-derived oils that are edible is that such materials are already "generally regarded as safe" (GRAS) by governmental authorities that regulate materials that come into contact with food, drug, or medical substances or are them themselves.

Colorant

As explained above, colorant can be a pigment, a dye, a combination of pigments, a combination of dyes, a combination of pigments and dye, a combination of pigment and dyes, or a combination of pigments and dyes. The choice of colorants depends on the ultimate color desired by the designer for the plastic article.

The science of color is well known to those skilled in the art. Without undue experimentation, one can use color matching techniques to identify a particular location in spherical color space. For example, one skilled in the art can use the teachings of PCT Publication WO 2004/095319 to digitally map color space using specific polymer carriers and colorants as raw material ingredients. Alternatively, one can make small samples called plaques for visual review.

Colorants are commercially available from a number of sources well known to those skilled in the art. Commercially available pigments are well known to those skilled in the art and include organic and inorganic colorant chemistries. Commercially available dyes are well known to those skilled in the art and include all organic chemistries. Commercial sources for pigments and dyes include multinational companies such as BASF, LanXess, Ciba-Geigy, Color-Chem International, Sun Chemical, Zhuhai Skyhigh Chemicals, and others identified at Internet Web Sites such as
http://www.colorpro.com/info/vendors/colorant.html and
http://dir.yahoo.com/Business and Economy/Business to Business/Chemicals
and Allied Products/Pigments and Dyes/

Table 1 lists 51 commercially available pigment colorants in a variety of primary and secondary colors, 47 chromatics, 3 blacks, and 1 white.

| **Table 1** | | | | |
|---|---|---|---|---|
| **Commercial Pigment Colorants** | | | | |
| **Raw Material Name** | **CI_Name** | **Family** | **COLOR** | **FDA *** |
| TIOXIDE R-FC6 WHITE | PIGMENT WHITE 6 | INORGANIC | WHITE | Y |
| REGAL 660R BLACK POWDER | PIGMENT BLACK 7 | ORGANIC | | N |
| MPC CHANNEL BLACK | PIGMENT BLACK 7 | ORGANIC | | Y |
| BK-5099 BLACK OXIDE | PIGMENT BLACK 11 | INORGANIC | | N |
| HELIOGEN BLUE K7090 | PIGMENT BLUE 15:3 | ORGANIC | BLUE | Y |
| Heliogen Blue K6903 | PIGMENT BLUE B 15:1 | ORGANIC | BLUE | Y |
| 34L2000 AZURE BLUE | PIGMENT BLUE 28 | INORGANIC | BLUE | Y |
| 34L2001 AMAZON BLUE | PIGMENT BLUE 36 | INORGANIC | BLUE | N |
| NUBIX G-58 ULTRAMARINE BLUE | PIGMENT BLUE 29 | INORGANIC | BLUE | Y |
| NUBIX C-84 ULTRAMARINE BLUE | PIGMENT BLUE 29 | INORGANIC | BLUE | Y |
| NUBIX E-28 ULTRAMARINE BLUE | PIGMENT BLUE 29 | INORGANIC | BLUE | Y |
| HELIOGEN GREEN K-8730 | PIGMENT GREEN 7 | ORGANIC | GREEN | Y |
| HELIOGEN GREEN K 8605 | PIGMENT GREEN 7 | ORGANIC | GREEN | Y |
| CHROMIUM OXIDE GREEN G-6099 | PIGMENT GREEN 17 | INORGANIC | GREEN | Y |
| CROMOPHTAL ORANGE GP | PIGMENT ORANGE 64 | ORGANIC | ORANGE | Y |
| 2920 BRILLIANT ORANGE | PIGMENT ORANGE 79 | ORGANIC | ORANGE | Y |
| NOVAPERM RED F5RKA | PIGMENT RED 170 | ORGANIC | RED | N |
| 225-2480 Sunbrite Scarlet 60:1 | Pigment Red 60:1 | ORGANIC | RED | N |
| IRGALITE RED LCB | PIGMENT RED 53:1 | ORGANIC | RED | N |
| DCC-2782 Barium 2B Red | Pigment Red 60:1 | ORGANIC | RED | N |
| Lithol Scarlet 4451 | Pigment Red 48:2 | ORGANIC | RED | N |
| CROMOPHTAL RED 2020 | PIGMENT VIOLET 19 | ORGANIC | RED | Y |
| CROMOPHTAL MAGENTA P | PIGMENT RED 202 | ORGANIC | RED | Y |
| CROMOPHTAL PINK PT | PIGMENT RED 122 | ORGANIC | RED | N |
| PALIOGEN RED K 3911 HD | PIGMENT RED 178 | ORGANIC | RED | Y |
| CROMOPHTAL RED 2030 | PIGMENT RED 254 | ORGANIC | RED | Y |
| CROMOPHTAL RED 2028 | PIGMENT RED 254 | ORGANIC | RED | Y |
| Colortherm Red 110M | PIGMENT RED 101 | INORGANIC | RED | Y |
| Colortherm Red 130M | PIGMENT RED 101 | INORGANIC | RED | Y |
| Colortherm Red 180M | PIGMENT RED 101 | INORGANIC | RED | Y |
| CINQUASIA VIOLET RT-891-D | PIGMENT VIOLET 19 | ORGANIC | VIOLET | Y |
| CROMOPHTAL VIOLET GT | PIGMENT VIOLET 23 | ORGANIC | VIOLET | N |
| PREMIER VU UMV (6112) | PIGMENT VIOLET 15 | INORGANIC | VIOLET | Y |
| SICOTAN BROWN K 2750 FG | PIGMENT YELLOW 164 | INORGANIC | BROWN | N |
| FERRITAN FZ-1000 | PIGMENT YELLOW 119 | INORGANIC | Tan | Y |
| NUBITERM Y-905K ZINC FERRITE | PIGMENT YELLOW 119 | INORGANIC | Tan | Y |
| PV FAST YELLOW HG | PIGMENT YELLOW 180 | ORGANIC | YELLOW | Y |
| IRGALITE YELLOW WGPH | PIGMENT YELLOW 168 | ORGANIC | YELLOW | N |
| PV FAST YELLOW HGR (11-3071) | PIGMENT YELLOW 191 | ORGANIC | YELLOW | Y |
| PALIOTOL YELLOW K 2270 | PIGMENT YELLOW 183 | ORGANIC | YELLOW | Y |
| CROMOPHTAL YELLOW HRPA | PIGMENT YELLOW 191:1 | ORGANIC | YELLOW | Y |
| CROMOPHTAL YELLOW GRP | PIGMENT YELLOW 95 | ORGANIC | YELLOW | Y |
| IRGALITE YELLOW WSR-P | PIGMENT YELLOW 62 | ORGANIC | YELLOW | N |
| CROMOPTHAL YELLOW 3RLP | PIGMENT YELLOW 110 | ORGANIC | YELLOW | Y |
| 9766 FD&C YELLOW #6 | PIGMENT YELLOW 104 | ORGANIC | YELLOW | Y |
| 9765 FD&C YELLOW #5 | PIGMENT YELLOW 100 | ORGANIC | YELLOW | Y |
| PALIOTOL YELLOW K 0961 (HD) | PIGMENT YELLOW 138 | ORGANIC | YELLOW | Y |
| SICOPLAST YELLOW 10-0770 | PIG YEL 138 / PIG YEL 183 | ORGANIC | YELLOW | Y |
| SICOTAN YELLOW K 2001 FG | PIGMENT BROWN 24 | INORGANIC | YELLOW | Y |
| SICOTAN YELLOW K 1011 | PIGMENT YELLOW 53 | INORGANIC | YELLOW | Y |
| COLORTHERM 10 | PIGMENT YELLOW 42 | INORGANIC | YELLOW | Y |

| | | | | |
|---|---|---|---|---|
| * As publicized by the commercial producer or as tested by the applicant, or both. | | | | |

Table 2 shows 14 commercially available dyes.

| **Table 2** | | | | |
|---|---|---|---|---|
| **Commercial Dye Colorants** | | | | |
| **Raw Material Name** | **CI Name** | **Family** | **Color** | **FDA*** |
| Lambdaplast Blue NL | Solvent Blue 59 | Anthraquinone | Blue | N |
| Macrolex Blue RR Granular | Solvent Blue 97 | Anthraquinone | Blue | N |
| Macrolex Green G Granular | Solvent Green 28 | Anthraquinone | Green | N |
| Macrolex Green 5B Granular | Solvent Green 3 | Anthraquinone | Green | N |
| Macrolex Orange R Granular | Disperse Orange 47 | Polymethine | Orange | N |
| Macrolex Orange 3G Granular | Solvent Orange 60 | Perinone | Orange | N |
| Macrolex Red EG Granular | Solvent Red 135 | Perinone | Red | N |
| Macrolex Red E2G Granular | Solvent Red 179 | Perinone | Red | N |
| Thermoplast Red 454 | Solvent Red 195 | Anthraquinone | Red | N |
| Macrolex Red Violet R Granular | Disperse Violet 26 | Anthraquinone | Violet | N |
| Macrolex Violet B Granular | Solvent Violet 13 | Anthraquinone | Violet | N |
| Macrolex Violet 3R Granular | Solvent Violet 36 | Anthraquinone | Violet | N |
| Key Plast Yellow 3G | Solvent Yellow 93 | Pyrazolone | Yellow | N |
| Key Plast Yellow AG | Solvent Yellow 114 | Quino-phthalone | Yellow | N |

| | | | | |
|---|---|---|---|---|
| * As publicized by the commercial producer or as tested by the applicant, or both. | | | | |

Preferably, colorants include colorants intended for transparent or translucent plastic articles, although colorants intended for opaque plastic articles are not excluded from consideration.

Achievement of a color match of a plaque with a desired color from the creativity of a designer or a pre-arranged color standard such as Pantone^{®} color standards from an inventory of commercially available colorants is relatively straightforward for a skilled color matcher, even if a few iterations are required to satisfy the customer.

Functional Additives

Concentrates of functional additives can also benefit from the present invention. Functional additives are generally classified into two types: performance additives that affect the performance of the final compound or processing additives that assist in the processing of the final compound either during compounding or during extrusion or molding.

Any presently known functional additive or later-discovered functional additive that is suitable for mixing via a concentrate into a compound is eligible for use with the bio-derived oil according to the present invention.

Non-limiting examples of performance additives include slip agents, anti-blocking agents, ultra-violet light filtering agents, anti-static agents, anti-fogging agents, blowing or foaming agents, anti-microbial agents, scratch and mar reducing agents, barrier agents, and the like, and combinations thereof.

Non-limiting examples of processing additives include lubricating agents, mold release agents, nucleating agents, flow agents, mold fill enhancing agents, cycle time reducing agents, purging agents, and the like, and combinations thereof.

Without undue experimentation, one of ordinary skill in the art can select functional additives from the list of OnCap™ brand additive concentrates from PolyOne Corporation (www.polyone.com) to be employed in making concentrates of the present invention using a bio-derived oil as explained above.

Surfactant

Surfactants are sometimes desired to aid in dispersion of dyes and pigments. Commercially available surfactants include Surfynol brand defoaming oxirane surfactants from Air Products and Chemicals.

Viscosity Modifier

Viscosity modifiers are sometimes desired to adjust the viscosity of liquid concentrates to ease their dosing. Commercially available modifiers include Cab-O-Sil brand silicate from Cabot Corporation.

Optional Functional Additives and Specialty Colorants

If the product is a color concentrate, then optionally, the functional additives identified above can also be added to improve processing or performance of the concentrate of the present invention or the polymer compound, or both, according to preferences of this skilled in the art. Smartbatch™ products from PolyOne Corporation include both colorants and functional additives in concentrate form for mixing with thermoplastic polymers to make thermoplastic compounds. One skilled in the art without undue experimentation can determine the appropriate concentration.

Frequently, the preparation of a colored plastic article does not involve merely color but also special effect features, such as Granites, Translucents, Pearls, Metallics, Fluorescents, Iridescents, Marbles, etc., and combinations thereof. For purposes of this invention, these special effect features are called specialty colorants.

Non-limiting examples of such optional functional additives and optional specialty colorants are commercially available from PolyOne Corporation of Avon Lake, Ohio, USA (www.polyone.com) and marketed under the following brands: OnColor FX colorants, PolyOne colorants, OnCap additives, etc.

Table 3 shows the acceptable, desirable and preferred weight percents of ingredients for concentrates of the present invention.

| **Table 3** | | | |
|---|---|---|---|
| **Ingredient (Wt. %)** | **Acceptable Range** | **Desirable Range** | **Preferred Range** |
| Bio-derived oil | 15 -- 99% | 20 -- 95% | 60 -- 95% |
| Colorant(s) or Functional Additive(s) | 1 -- 75% | 5 -- 60% | 10 -- 40% |
| Optional Surfactant | 0 -- 20% | 0 -- 5% | 0.5 -- 1.5% |
| Optional Viscosity Modifier | 0-15% | 0-10% | 0-5% |
| Optional Functional Additive(s) or Specialty Colorant(s) | 0 -- 50% | 0 -- 10% | 0 -- 5% |

Preparation of Concentrates

The mixing equipment used to make the concentrate can be any suitable equipment already used in the art of making conventional concentrates. For example, such equipment includes high speed "Cowles" type dispersors, media mills, three-roll mills, rotor-stator type dispersors, and horizontal or basket mills with ceramic or steel balls.

Mixing equipment can operate at mixing speeds ranging from about 100 rpm to about 10,000 rpm, and preferably from about 500 to about 8000 rpm. Mixing equipment can operate at temperatures ranging from about 25°C to about 100°C, and preferably from about 40°C to about 80°C.

Letdown of Concentrate

The concentration of colorant or functional additive into a carrier is significant because of the relative cost of the colorant or functional additive ingredient(s) and the need for that color or additive to consistently and precisely mix and disperse into the carrier and then to consistently and precisely dilute into the plastic resin and other compound ingredients during "letdown" of the concentrate in mixing equipment prior to formation of the pre-form embryonic bottles or other articles.

Letdown ratios depend on the concentration of colorant or additive in the concentrate and whether the final molded product is intended to be opaque, translucent, or transparent.

Concentration of concentrate after letdown into the final molded or extruded product can range from about 0.05 to about 0.2 weight percent, and preferably from about 0.1 to about 0.5 weight percent of the final compound so molded or extruded.

### USEFULNESS OF THE INVENTION

As stated previously, the bio-derived polymeric resins are particularly suitable for use with concentrates of the present invention. Non-limiting examples of such bio-derived polymeric resin are polylactic acid (PLA); the family of polyhydroxyalkanoates (PHA) such as polyhydroxybutyrate (PHB) and polyhydroxybutyrate-co-valerate (PHBV); polycaprolactone (PCL); polybutylene succinate (PBS); polybutylene succinate-adipate (PBSA); polyester carbonate or polybutylene succinate-carbonate (PEC); polyethylene succinate (PES); polybutylene adipate-terephthalate (PBAT); polytetramethylene adipate-terephthalate (PTMAT); starch-based polymers; polyvinyl alcohol (PVA or PVOH); cellulose acetate (CA); polyolefins made from alkanol feedstocks; and combinations thereof.

Alternatively, the bio-derived polymeric resins can also be used with any biodegradable polymers derived from fossil resources which is compatible with the bio-derived polymeric resin used to make the color or additive concentrate of the present invention. For example, the concentrate can be used with polytrimethylene terephthalate (PTT).

Nothing in this invention is intended to limit use of concentrates of the present invention is bio-derived polymeric resins or biodegradable polymers derived from fossil resources. The concentrates of the present invention can also be used with any synthetically-derived polymeric resin, if bio-derived polymeric resins are not desired. All synthetically-derived polymeric resins that are compatible with concentrates of the present invention are eligible for use with such concentrates. Non-limiting examples of such synthetically-derived polymeric resins include olefinic-, styrenic-, and vinyl-based polymeric resins.

But preferably, because of the potential versatility of bio-derived oil carrier being compatible with so many different bio-derived polymeric resins, consistent and precise dispersion of color into the plastic article is possible with delivery being in a convenient liquid form.

The plastic article can be opaque, translucent, or transparent even though it has color from concentrates of the present invention. Precise color matching and consistent metering of color in amounts as little as 0.08 weight percent of concentrate can be achieved.

Other embodiments appear in the examples.

### EXAMPLES

Table 4 shows Examples 1 and 2. Table 5 shows how Examples 1 and 2 were made and their properties.

| **Table 4** | | |
|---|---|---|
| **Ingredients and Source** | **Example 1** | **Example 2** |
| Refined Grape seed oil (CAS 84929-27-1) | 99% | 97.5% |
| Delhaize Chain Store of Belgium COMPTOIR FRANÇAIS INTERCHIMIE - 145, RUE DE PARIS - 93013 BOBIGNY | | |
| Heliogen Blue K6907 | 1% | |
| Phtalo Blue | | |
| Pigment blue 15-1 (CAS 147-14-8) | | |
| BASF of Germany | | |
| Kenawax red 2GSP | | 2.5% |
| Soluble dye | | |
| Solvent red 135 (CAS 20749-68-2) | | |
| Albion Color of U.K. | | |
| **Total (Weight Percent)** | **100%** | **100%** |

| **Table 5** | | |
|---|---|---|
| **Processing** | **Example 1** | **Example 2** |
| Mixing Equipment | Premix on High speed dissolver and dispersion on triple roll mill | |
| Mixing Temp. | Room temperature. 22° C | |
| Mixing Speed | Dissolver: 1700 RPM | |
| Order of Addition of Ingredients | Oil with colorant | |

| **Properties** | **Example 1** | **Example 2** |
|---|---|---|
| Form of Product After Mixing Viscosity (cps) measured using Brookfield viscosimeter, Spindel N° 5, 10 rpm, 23°C | Blue liquid color concentrate with a viscosity of 6400 cps | Red liquid color concentrate with a viscosity of 8400 cps |
| Dispersion Quality | 6-7 µm | 6-7 µm |
| Hegman-type gage (ASTM D1210) | | |

The invention is not limited to the above embodiments. The claims follow.

## Claims

1. A liquid concentrate for plastic articles, comprising:
(a) a carrier comprising a bio-derived oil;
(b) at least one colorant or functional additive;
(c) 0.5 - 1.5 weight percent of said concentrate of a defoaming oxirane surfactant;
(d) silicate viscosity modifier; and
optionally (e) at least other one functional additive or specialty colorant.

2. The concentrate of Claim 1, wherein the concentrate is a liquid.

3. The concentrate of Claim 1 or Claim 2, wherein the bio-derived oil is selected from the group consisting of almond oil, apricot kernel oil, castor oil, coconut oil, palm oil, corn oil, cotton seed oil, olive oil, palm kernel oil, peanut oil, grape seed oil, canola oil, rice bran oil, safflower oil, sesame oil, soybean oil, sunflower seed oil, wheat germ oil, sorghum, coco butter, and combinations thereof.

4. The concentrate of any of the above Claims, wherein the colorant comprises a pigment, a dye, a combination of pigments, a combination of dyes, a combination of pigments and dye, a combination of pigment and dyes, or a combination of pigments and dyes.

5. The concentrate of any of the above Claims, wherein the functional additive is a performance additive, a processing additive, or both.

6. The concentrate of Claim 5, wherein the performance additive is selected from the group consisting of slip agents, anti-blocking agents, ultra-violet light filtering agents, anti-static agents, anti-fogging agents, blowing or foaming agents, anti-microbial agents, scratch and mar reducing agents, barrier agents, and combinations thereof.

7. The concentrate of Claim 5, or Claim 7, wherein the processing additive is selected from the group consisting of lubricating agents, mold release agents, nucleating agents, flow agents, mold fill enhancing agents, cycle time reducing agents, purging agents, and combinations thereof.

8. The concentrate of any of the above Claims, wherein optional functional additives are present in a concentrate that contains colorant, and wherein the optional functional additive comprises a performance additive or a processing additive.

9. The concentrate of any of the above Claims, wherein an optional specialty colorant is present in a concentrate that contains colorant, and wherein the optional specialty colorant is selected from the group consisting of Granites, Translucents, Pearls, Metallics, Fluorescents, Iridescents, Marbles, and combinations thereof.

10. The concentrate of any of the above Claims, wherein the bio-derived oil is present in an amount ranging from about 15 to 99 weight percent of the concentrate and wherein the colorant or functional additive is present in an amount ranging from about 1 to about 75 weight percent of the concentrate.

11. The concentrate of any of the above Claims, wherein the bio-derived oil is present in an amount ranging from about 60 to about 95 weight percent of the concentrate and wherein the colorant or functional additive is present in an amount ranging from about 10 to about 40 weight percent of the concentrate.

12. The concentrate of any of the above Claims, wherein the concentrate is diluted into a compatible polymeric resin in an amount ranging from about 0.05 to about 0.2 weight percent.

13. The concentrate of Claim 12, wherein the compatible polymeric resin is selected from the group consisting of a bio-derived polymeric resin, a biodegradable polymer derived from fossil resources, and a synthetically-derived polymeric resin.

14. The concentrate of Claim 13, wherein the bio-derived polymeric resin is selected from the group consisting of polylactic acid (PLA); polyhydroxyalkanoates (PHA); polycaprolactone (PCL); polybutylene succinate (PBS); polybutylene succinate-adipate (PBSA); polyester carbonate or polybutylene succinate-carbonate (PEC); polyethylene succinate (PES); polybutylene adipate-terephthalate (PBAT); polytetramethylene adipate-terephthalate (PTMAT); starch-based polymers; polyvinyl alcohol (PVA or PVOH); cellulose acetate (CA); polyolefins made from alkanol feedstocks; and combinations thereof.

## Patentansprüche

1. Flüssigkonzentrat für Plastikartikel, umfassend:
(a) einen Träger, der ein Öl aus biologischer Quelle umfasst;
(b) mindestens ein Farbmittel oder funktionelles Additiv;
(c) 0,5 - 1,5 Gewichtsprozent, bezogen auf das Konzentrat, eines entschäumenden Tensids auf Oxiranbasis;
(d) ein Viskositätsmodifikationsmittel auf Silikatbasis; und
optional (e) mindestens ein weiteres funktionelles Additiv oder Spezialfarbmittel.

2. Konzentrat nach Anspruch 1, wobei das Konzentrat eine Flüssigkeit ist.

3. Konzentrat nach Anspruch 1 oder Anspruch 2, wobei das Öl aus biologischer Quelle ausgewählt ist aus der Gruppe, bestehend aus Mandelöl, Aprikosenkernöl, Rizinusöl, Kokosöl, Palmöl, Maiskeimöl, Baumwollsamenöl, Olivenöl, Palmkernöl, Erdnussöl, Traubenkernöl, Rapsöl, Reiskleieöl, Distelöl, Sesamöl, Sojabohnenöl, Sonnenblumenkernöl, Weizenkeimöl, Sorghum, Kakaobutter und Kombinationen hiervon.

4. Konzentrat nach einem der vorhergehenden Ansprüche, wobei das Farbmittel ein Pigment, ein Farbstoff, eine Kombination an Pigmenten, eine Kombination an Farbstoffen, eine Kombination an Pigmenten und Farbstoff, eine Kombination an Pigment und Farbstoffen oder eine Kombination an Pigmenten und Farbstoffen umfasst.

5. Konzentrat nach einem der vorhergehenden Ansprüche, wobei das funktionelle Additiv ein Additiv, das die Eigenschaften beeinflusst, ein Additiv, das die Herstellung beeinflusst, oder beides ist.

6. Konzentrat nach Anspruch 5, wobei das Additiv, das die Eigenschaften beeinflusst, ausgewählt ist aus der Gruppe, bestehend aus Gleitmittel, Antiblockiermittel, Mitteln zum Filtern von ultraviolettem Licht, antistatische Mittel, Beschlagschutzmittel, Blas- oder Schäummittel, antimikrobielle Mittel, Kratzschutzmittel, Barrieremittel und Kombinationen hiervon.

7. Konzentrat nach Anspruch 5 oder Anspruch 6, wobei das Additiv, das die Herstellung beeinflusst, ausgewählt ist aus der Gruppe, bestehend aus Gleitmittel, Formentrennmittel, Nukleierungsmittel, Fließmittel, Mittel zum Verbessern der Formfüllung, Mittel zur Taktzeitverkürzung, Spülmittel und Kombinationen hiervon.

8. Konzentrat nach einem der vorhergehenden Ansprüche, wobei optional funktionelle Additive in einem Konzentrat, das ein Farbmittel enthält, vorhanden sind, und wobei das optional funktionelle Additiv ein Additiv, das die Eigenschaften beeinflusst, oder ein Additiv, das die Herstellung beeinflusst, umfasst.

9. Konzentrat nach einem der vorhergehenden Ansprüche, wobei ein optionales Spezialfarbmittel in einem Konzentrat, das ein Farbmittel enthält, vorhanden ist, und wobei das optionale Spezialfarbmittel ausgewählt ist aus der Gruppe, bestehend aus Graniten, Transluzenten, Perlen, Metallic, Floureszenten, Irideszenten, Marmor und Kombinationen hiervon.

10. Konzentrat nach einem der vorhergehenden Ansprüche, wobei das Öl aus biologischer Quelle in einer Menge im Bereich von etwa 15 bis 99 Gewichtsprozent, bezogen auf das Konzentrat, vorhanden ist und wobei das Farbmittel oder funktionelle Additiv in einer Menge im Bereich von etwa 1 bis etwa 75 Gewichtsprozent, bezogen auf das Konzentrat, vorhanden ist.

11. Konzentrat nach einem der vorhergehenden Ansprüche, wobei das Öl aus biologischer Quelle in einer Menge im Bereich von etwa 60 bis etwa 95 Gewichtsprozent, bezogen auf das Konzentrat, vorhanden ist und wobei das Farbmittel oder funktionelle Additiv in einer Menge im Bereich von etwa 10 bis etwa 40 Gewichtsprozent, bezogen auf das Konzentrat, vorhanden ist.

12. Konzentrat nach einem der vorhergehenden Ansprüche, wobei das Konzentrat in einem kompatiblen polymeren Harz in einer Menge im Bereich von etwa 0,05 bis etwa 0,2 Gewichtsprozent verdünnt ist.

13. Konzentrat nach Anspruch 12, wobei das kompatible polymere Harz ausgewählt ist aus der Gruppe, bestehend aus einem polymeren Harz aus biologischer Quelle, einem biologisch abbaubaren Harz, das aus fossilen Quellen stammt, und einem polymeren Harz synthetischen Ursprungs.

14. Konzentrat nach Anspruch 13, wobei das polymere Harz aus biologischer Quelle ausgewählt ist aus der Gruppe, bestehend aus Polylmilchsäure (PLA); Polyhydroxyalkanoate (PHA); Polycaprolacton (PCL); Polybutylensuccinat (PBS); Polybutylensuccinat-adipat (PBSA); Polyestercarbonat oder Polybutylensuccinatcarbonat (PEC); Polyethylensuccinat (PES); Polybutylenadipat-terephthalat (PBAT); Polytetramethylenadipat-terephthalat (PTMAT); Polymere auf Stärkebasis; Polyvinylalkohol (PVA oder PVOH); Celluloseacetat (CA); aus alkoholischen Rohstoffen gemachte Polyolefine und Kombinationen hiervon.

## Revendications

1. Concentré liquide pour articles en plastique, comprenant :
(a) un entraîneur comprenant une huile bio-dérivée ;
(b) au moins un colorant ou additif fonctionnel ;
(c) 0,5 à 1,5 pour cent en poids dudit concentré d'un surfactant oxirane anti-mousse ;
(d) un modifiant de viscosité de silicate ; et facultativement (e) au moins un autre additif fonctionnel ou colorant spécial.

2. Concentré selon la revendication 1, dans lequel le concentré est un liquide.

3. Concentré selon la revendication 1 ou la revendication 2, dans lequel l'huile bio-dérivée est sélectionnée parmi le groupe constitué d'huile d'amande, d'huile de noyau d'abricot, d'huile de ricin, d'huile de noix de coco, d'huile de palme, d'huile de maïs, d'huile de graine de coton, d'huile d'olive, d'huile de palmiste, d'huile d'arachide, d'huile de pépin de raisin, d'huile de colza, d'huile de riz, d'huile de carthame, d'huile de sésame, d'huile de soja, d'huile de tournesol, d'huile de germe de blé, de sorgho, de beurre de noix de coco, et d'associations de ceux-ci.

4. Concentré selon une quelconque des revendications précédentes, dans lequel le colorant comprend un pigment, une teinture, une association de pigments, une association de teintures, une association de pigments et de teinture, une association de pigment et de teintures, ou une association de pigments et de teintures.

5. Concentré selon une quelconque des revendications précédentes, dans lequel l'additif fonctionnel est un additif de performance, un additif de traitement, ou les deux.

6. Concentré selon la revendication 5, dans lequel l'additif de performance est sélectionné parmi le groupe constitué d'agents de glissance, d'agents anti-adhérents, d'agents de filtration de lumière ultraviolette, d'agents antistatiques, d'agents anti-condensation, d'agents d'expansion ou moussant, d'agents antimicrobiens, d'agents de réduction de rayure et d'abrasion, d'agents barrières, et d'associations de ceux-ci.

7. Concentré selon la revendication 5 ou la revendication 6, dans lequel l'additif de traitement est sélectionné parmi le groupe constitué d'agents lubrifiants, d'agents de démoulage, d'agents de nucléation, d'agents d'écoulement, d'agents d'amélioration de remplissage de moule, d'agents de réduction de temps de cycle, d'agents de purge, et d'associations de ceux-ci.

8. Concentré selon une quelconque des revendications précédentes, dans lequel des additifs fonctionnels facultatifs sont présents dans un concentré qui contient un colorant, et dans lequel l'additif fonctionnel facultatif comprend un additif de performance ou un additif de traitement.

9. Concentré selon une quelconque des revendications précédentes, dans lequel un colorant spécial facultatif est présent dans un concentré qui contient un colorant, et dans lequel le colorant spécial facultatif est sélectionné parmi le groupe constitué de granites, de translucides, de perles, de métalliques, de fluorescents, d'iridescents, de marbres, et d'associations de ceux-ci.

10. Concentré selon une quelconque des revendications précédentes, dans lequel l'huile bio-dérivée est présente dans une quantité variant d'environ 15 à 99 pour cent en poids du concentré et dans lequel le colorant ou additif fonctionnel est présent dans une quantité variant d'environ 1 à environ 75 pour cent en poids du concentré.

11. Concentré selon une quelconque des revendications précédentes, dans lequel l'huile bio-dérivée est présente dans une quantité variant d'environ 60 à environ 95 pour cent en poids du concentré et dans lequel le colorant ou additif fonctionnel est présent dans une quantité variant d'environ 10 à environ 40 pour cent en poids du concentré.

12. Concentré selon une quelconque des revendications précédentes, dans lequel le concentré est dilué dans une résine polymère compatible dans une quantité variant d'environ 0,05 à environ 0,2 pour cent en poids.

13. Concentré selon la revendication 12, dans lequel la résine polymère compatible est sélectionnée parmi le groupe constitué d'une résine polymère bio-dérivée, d'un polymère biodégradable dérivé de ressources fossiles, et d'une résine polymère dérivées synthétiquement.

14. Concentré selon la revendication 13, dans lequel la résine polymère bio-dérivée est sélectionnée parmi le groupe constitué d'acide polylactique (PLA) ; de polyhydroxyalkanoates (PHA) ; de polycaprolactone (PCL) ; de succinate de polybutylène (PBS) ; de succinate-adipate de polybutylène (PBSA) ; de carbonate de polyester ou succinate-carbonate de polybutylène (PEC) ; de succinate de polyéthylène (PES) ; d'adipate de polybutylène-téréphtalate (PBAT) ; d'adipate de polytétraméthylène-téréphtalate (PTMAT) ; de polymères à base d'amidon ; d'alcool polyvinylique (PVA ou PVOH) ; d'acétate de cellulose (CA) ; de polyoléfines faites de produits de départ d'alkanol ; et d'associations de ceux-ci.
